# EUROPEAN PATENT APPLICATION

(11) **EP 2 645 531 A1**
(43) Date of publication of application: **02.10.2013**
(21) Application number: 11843400.0
(22) Date of filing: 14.11.2011
(51) Int. Cl.: H02J 13/00, G06Q 10/00

(54) **POWER RELAY DEVICE, POWER RELAY METHOD, POWER SUPPLY CONTROL DEVICE, POWER SUPPLY CONTROL METHOD, AND POWER SUPPLY CONTROL SYSTEM**

(30) Priority: 22.11.2010 JP 2010259735
(71) Applicant: Sony Corporation, Tokyo 108-0075 (JP)
(72) Inventor: WASHIRO Takanori, Tokyo 108-0075 (JP)
(74) Representative: Jackson, Jonathan Andrew
(86) International application number: PCT/JP2011/076174
(87) International publication number: WO 2012/070417

(57) **Abstract**

The present invention relates to a power relay apparatus, power relay method, power supply control apparatus, power supply control method, and power supply control system which can readily manage individual power consumption.

Output terminals 51 and 52 relay and output the AC power supplied by input terminals 41 and 42 to connected equipment. An IC chip 325, in order to receive authentication from a power supply control apparatus and receive a supply of the AC power from the power supply control apparatus to the input terminals 41 and 42, outputs stored power information to the power supply control apparatus via the input terminals 41 and 42, by subjecting a high frequency signal that is input from the power supply control apparatus via the input terminals 41 and 42 to load modulation. The high-pass filter 323 serving as a high frequency signal filter inputs the high frequency signal input via the input terminals 41 and 42 to the IC chip 325, while inhibiting the AC power having a frequency lower than the high frequency signal, which is input via the input terminals 41 and 42, from being input in the IC chip 325.

## Description

### Technical Field

The present invention relates to a power relay apparatus, power relay method, power supply control apparatus, power supply control method, and power supply control system, and particularly relates to a power relay apparatus, power relay method, power supply control apparatus, power supply control method, and power supply control system that enable ease of individual power consumption management.

### Background Art

Recently, particularly among young people, people who share a room have increased. In this case, multiple friends or the like rent and use one room together. Also, each person uses various types of equipment that operate with electric power, such as an electric lamp, air conditioner, and so forth. In the past in such a case, even if the amount of power consumed by the devices used by each person is different, the overall electric bill of the room thereof is often divided by the number of users, and each person pays the same amount of money.

An instrument is measuring installed on a power line that supplies power to the equipment, and the power supplied by the power line is measured by this measuring instrument thereof and displayed (for example, PTL 1). Now, there may be a situation where each person sharing the room measures the power of the equipment used by himself with such a measuring instrument, these are totaled, and each person pays the electric bill according to his/her own consumption.

### Citation List

### Patent Literature

PTL 1: Japanese Unexamined Patent Application Publication No. 2010-17041

### Summary of Invention

### Technical Problem

However, it is troublesome for each person to measure and record the power used. Also, equipment can be used even without measuring, so not necessarily will everyone perform the measurements. That is to say, it is difficult to accurately and easily manage individual power consumption.

The present invention is made with consideration for such a situation, and enables readily managing individual power consumption.

### Solution to Problem

An aspect of the present invention is a power relay terminal which provides an input terminal in which power is input; an output terminal that relays the power supplied from the input terminal and outputs to an equipment which is connected and operates by power; and a storage device which, in order to receive authentication from a power supply control apparatus connected to the input terminal and receive a supply of the power from the power supply control terminal in the input terminal, outputs stored power information to the power supply control apparatus via the input terminal, by subjecting a high frequency signal that is input from the power supply control apparatus via the input terminal to load modulation.

The storage device may be an electronic tag.

A filter that causes the high frequency signal input via the input terminal to be input to the storage device, while inhibiting the power that is input via the input terminal from being input into the storage device, may also be provided.

A filter that supplies the power that is input from the input terminal to the output terminal, while inhibiting the high frequency signal that is input from the input terminal from being supplied to the output terminal, may also be provided.

A power generating unit that is connected in parallel to the storage device, and that supplies, to the storage device, the voltage generated by the high frequency signal which is input from the input terminal, may also be provided.

The voltage generating unit may be made up of a coil or a transformer.

The power information stored in the storage device may include at least one of identifying information and history information.

The power information stored in the storage device may further include specification information or history information.

An aspect of the present invention is a power relay method which is a power relay method of a power relay terminal providing an input terminal and an output terminal and a storage device, wherein the input terminal inputs power; the output terminal that relays the power supplied from the input terminal and outputs to an equipment which is connected and operates by power; and the storage device outputs, in order to receive authentication from a power supply control apparatus connected to the input terminal and receive a supply of the power from the power supply control terminal in the input terminal, stored power information to the power supply control apparatus via the input terminal, by subjecting a high frequency signal that is input from the power supply control apparatus via the input terminal to load modulation.

Another aspect of the present invention is a power supply control apparatus including an output terminal that outputs output power; a switch that switches when outputting and when blocking the output power from the output terminal; a communication unit that outputs a high frequency signal via the output terminal and communicates with a power relay terminal that further relays and outputs the output power supplied from the output terminal to the equipment operated by power, thereby reading out power information of the power relay terminal; and a control unit which switches the switch so that, upon authenticating from the power information read out by the communication unit that that which is connected to the output terminal is the power relay terminal that relays and outputs, to the equipment, the output power supplied from the output terminal, the output power is output from the output terminal, while the output power supplied to the power relay terminal is measured, and when authentication is not made that that which is connected to the output terminal is the power relay terminal, the output of the output power from the output terminal is blocked.

The control unit may store the results of the output power measurement in the power relay terminal as history information.

The control unit may read out the history information from the power relay terminal for billing processing.

The control unit may further read out the billing information from the power relay terminal for billing processing.

The control unit may read out a credit card number or electronic money information or user information as the billing information.

A voltage switching unit that switches AC power that is input externally to the output power of a predetermined voltage, according to specification information stored in the storage device provided to the connected power relay terminal or the equipment, and outputs to the output terminal, may also be provided.

The voltage switching unit may switch and output, as the output power, one of AC power or DC power of a predetermined voltage, according to specification information recorded in the storage device provided to the connected power relay terminal or the equipment.

Another aspect of the present invention is a power supply control method of a power supply control apparatus including an output terminal; a switch; a communication unit; and a control unit; wherein the output terminal outputs the output power; the switch switches, when outputting and when blocking the output power from the output terminal; the communication unit outputs a high frequency signal via the output terminal and communicates with a power relay terminal that further relays and outputs the output power supplied from the output terminal to the equipment operated by power, thereby reading out power information of the power relay terminal; and the control unit switches the switch so that, upon authenticating from the power information read out by the communication unit that that which is connected to the output terminal is the power relay terminal that relays and outputs, to the equipment, the output power supplied from the output terminal, the output power is output from the output terminal, while the output power supplied to the power relay terminal is measured, and when authentication is not made that that which is connected to the output terminal is the power relay terminal, the output of the output power from the output terminal is blocked.

Yet another aspect of the present invention is a power supply control system including a power supply control apparatus that outputs output power supplied to equipment that is operated by power; and a power relay terminal that relays and outputs, to the equipment, the output power input from the power supply control apparatus, wherein the power supply control apparatus includes an output terminal that outputs output power; a switch that switches when outputting and when blocking the output power from the output terminal; a communication unit outputs a high frequency signal via the output terminal and communicates with the power relay terminal which is connected to the output terminal, thereby reading out power information of the power relay terminal; and a control unit that switches the switch so that, upon authenticating from the power information read out by the communication unit that that which is connected to the output terminal is the power relay terminal that relays and outputs, to the equipment, the output power supplied from the output terminal, the output power is output from the output terminal, while the output power supplied to the power relay terminal is measured, and when authentication is not made that that which is connected to the output terminal is the power relay terminal, the output of the output power from the output terminal is blocked; and wherein the power relay terminal includes an input terminal in which the output power is input; an output terminal configured to relay the output power supplied from the input terminal and outputs to the connected equipment; and a storage device which, in order to receive authentication from the power supply control apparatus connected to the input terminal and receive a supply of the output power from the power supply control terminal in the input terminal, outputs the stored power information to the power supply control apparatus via the input terminal, by subjecting a high frequency signal that is input from the power supply control apparatus via the input terminal to load modulation.

Yet another aspect of the present invention is a power supply control method of a power supply control system including a power supply control apparatus that outputs output power to be supplied to equipment operated by power; and a power relay terminal configured to relay and output, to the equipment, the output power input from the power supply control apparatus, wherein in the power supply control apparatus, the output terminal outputs the output power; the switch switches, when outputting and when blocking the output power from the output terminal; the communication unit outputs a high frequency signal via the output terminal and communicates with the power relay terminal that is connected to the output terminal, thereby reading out power information of the power relay terminal; and the control unit switches the switch so that, upon authenticating from the power information read out by the communication unit that that which is connected to the output terminal is the power relay terminal that relays and outputs, to the equipment, the output power supplied from the output terminal, the output power is output from the output terminal, while the output power supplied to the power relay terminal is measured, and when authentication is not made that that which is connected to the output terminal is the power relay terminal, the output of the output power from the output terminal is blocked; and in the power relay terminal, the input terminal inputs the output power; the output terminal of the power relay terminal relays and output, to the connected equipment, the output power supplied from the input terminal; and the storage device outputs, in order to receive authentication from the power supply control apparatus connected to the input terminal and receive a supply of the output power from the power supply control apparatus in the input terminal, the stored power information to the power supply control apparatus via the input terminal, by subjecting a high frequency signal that is input from the power supply control apparatus via the input terminal to load modulation.

According to another aspect of the present invention, the input terminal inputs power; the output terminal relays the power supplied from the input terminal and outputs to an equipment which is connected and operates by power; and the storage device, in order to receive authentication from a power supply control apparatus connected to the input terminal and receive a supply of the power from the power supply control terminal in the input terminal, outputs stored power information to the power supply control apparatus via the input terminal, by subjecting a high frequency signal that is input from the power supply control apparatus via the input terminal to load modulation.

According to an aspect of the present invention, the output terminal outputs output power; the switch switches when outputting and when blocking the output power from the output terminal; the communication unit outputs a high frequency signal via the output terminal and communicates with a power relay terminal that further relays and outputs the output power supplied from the output terminal to the equipment operated by power, thereby reading out power information of the power relay terminal; and the control unit switches the switch so that, upon authenticating from the power information read out by the communication unit that that which is connected to the output terminal is the power relay terminal that relays and outputs, to the equipment, the output power supplied from the output terminal, the output power is output from the output terminal, while the output power supplied to the power relay terminal is measured, and when authentication is not made that that which is connected to the output terminal is the power relay terminal, the output of the output power from the output terminal is blocked.

According to yet another aspect of the present invention, with the power supply control apparatus, the output terminal outputs the output power; the switch switches when outputting and when blocking the output power from the output terminal; the communication unit outputs a high frequency signal via the output terminal and communicates with the power relay terminal that is connected to the output terminal, thereby reading out power information of the power relay terminal; and the control unit switches the switch so that, upon authenticating from the power information read out by the communication unit that that which is connected to the output terminal is the power relay terminal that relays and outputs, to the equipment, the output power supplied from the output terminal, the output power is output from the output terminal, while the output power supplied to the power relay terminal is measured, and when authentication is not made that that which is connected to the output terminal is the power relay terminal, the output of the output power from the output terminal is blocked; and with the power relay terminal, the input terminal inputs the output power; the output terminal of the power relay terminal relays and output, to the connected equipment, the output power supplied from the input terminal; and the storage device outputs, in order to receive authentication from a power supply control apparatus connected to the input terminal and receive a supply of the output power from the power supply control apparatus in the input terminal, the stored power information to the power supply control apparatus via the input terminal, by subjecting a high frequency signal that is input from the power supply control apparatus via the input terminal to load modulation.

### Advantageous Effects of Invention

As described above, according to aspects of the present invention, individual power consumption can be easily managed.

### Brief Description of Drawings

[Fig. 1] Fig. 1 is a block diagram illustrating a configuration of an embodiment of a power supply control system according to the present invention.
[Fig. 2] Fig. 2 is a block diagram illustrating a configuration of an embodiment of a power gateway.
[Fig. 3] Fig. 3 is a block diagram illustrating a configuration of an embodiment of a voltage switching unit.
[Fig. 4] Fig. 4 is a block diagram illustrating a configuration of an embodiment of a reader/writer.
[Fig. 5] Fig. 5 is a block diagram illustrating a configuration of an embodiment of a controller.
[Fig. 6] Fig. 6 is a block diagram illustrating a configuration of an embodiment of a power plug adapter.
[Fig. 7] Fig. 7 is a block diagram illustrating a configuration of an embodiment of an IC chip.
[Fig. 8] Fig. 8 is a block diagram illustrating another configuration of an embodiment of a voltage generating unit.
[Fig. 9] Fig. 9 is a block diagram illustrating yet another configuration of an embodiment of a voltage generating unit.
[Fig. 10] Fig. 10 is a block diagram illustrating a configuration of an embodiment of a home server.
[Fig. 11] Fig. 11 is a flowchart describing authentication processing of a power gateway.
[Fig. 12] Fig. 12 is a flowchart describing authentication processing of a power plug adapter.
[Fig. 13] Fig. 13 is a diagram describing processing based on the authentication.
[Fig. 14] Fig. 14 is a diagram illustrating a configuration of an embodiment of a system in the case of storing power information.
[Fig. 15] Fig. 15 is a block diagram illustrating a configuration of an embodiment of reader/writer equipment.
[Fig. 16] Fig. 16 is a block diagram illustrating a functional configuration of a personal computer.
[Fig. 17] Fig. 17 is a flowchart describing storage processing of a personal computer.
[Fig. 18] Fig. 18 is a flowchart describing storage processing of the reader/writer equipment.
[Fig. 19] Fig. 19 is a block diagram illustrating another configuration of an embodiment of a power plug adapter.

### Description of Embodiments

### [Fundamental Configuration of Power Supply Control System]

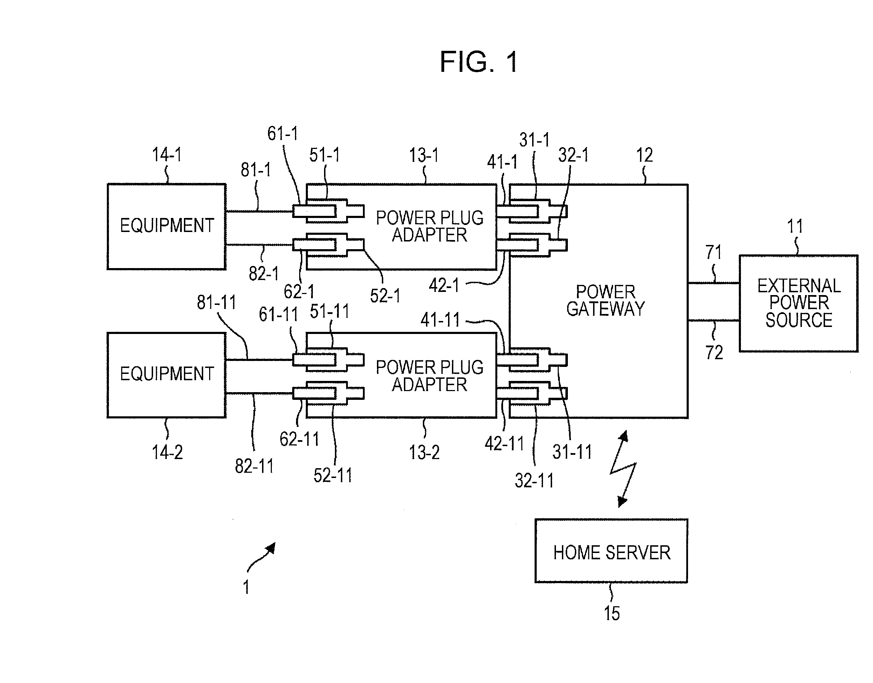

Fig. 1 is a block diagram illustrating a configuration of an embodiment of a power supply control system 1 according to the present invention. The power supply control system 1 herein is made up of an external power source 11, power gateway 12, power plug adapters 13-1 and 13-2, equipment 14-1 and 14-2, and home server 15. Note that hereinafter, in cases where the power plug adapters 13-1 and 13-2, equipment 14-1 and 14-2 do not have to be individually distinguished, these will simply be denoted as power plug adapter 13 or equipment 14. The same will be true for other members also.

The external power source 11 outputs commercial AC power of 50 Hz or 60 Hz, for example, to the power gateway 12 via power lines 71 and 72. It goes without saying that the frequencies are not limited to these. The external power source 11 may also be made up of a generator, battery, or the like.

The power gateway 12 generates output voltage of a predetermined voltage from AC power (let us say AC power in the case of this embodiment) supplied from the external power 11, and outputs this from an output terminal 31 that forms an outlet. In the case of this embodiment, a total of two outlets are formed serving as the terminal 31, one outlet made up of a pair of output terminals 31-1 and 32-1, and another outlet made up of a pair of output terminals 31-11 and 32-11. It goes without saying that the number of outlets may be one, or may be three or more.

A pair of input terminals 41-1 and 42-1 that make up a plug of the power plug adapter 13-1 is connected to the pair of output terminals 31-1 and 32-1 of the power gateway 12. Similarly, a pair of input terminals 41-11 and 42-11 that make up a plug of the power plug adapter 13-2 is connected to the other pair of output terminals 31-11 and 32-11 of the power gateway 12.

The power plug adapter 13-1 serving as the power relay terminal relays the output voltage supplied from the power gateway 12 without change, and outputs this from a pair of output terminals 51-1 and 52-1 that make up one outlet. Similarly, the power plug adapter 13-2 serving as another power relay terminal relays the output voltage supplied from the power gateway 12 without change, and outputs this from a pair of output terminals 51-11 and 52-11 that make up one outlet.

The power gateway 12 reads out information stored in the power plug adapters 13-1 and 13-2, and stores information therein. Further, the power gateway 12 also may relay from the output plug adapter 13-1 and read out the output information stored in the equipment 14-1 which is connected to the output terminals 51-1 and 52-1, and store information therein. Further, input terminals 61-1 and 62-1 of the equipment 14-1 may be connected to the output terminals 31-1 and 32-1 of the power gateway 12, and output information recorded in a storage device housed in the equipment 14-1 may be read out and stored therein. Similarly, the power gateway 12 may relay from the power plug adapter 13-2 and read out the output information stored in the equipment 14-2 that is connected to the output terminals 51-11 and 52-11, and store information therein. Further, input terminals 61-11 and 62-11 of the equipment 14-2 may be connected to the output terminals 31-11 and 32-11 of the power gateway 12, and output information recorded in a storage device housed in the equipment 14-2 may be read out and stored therein.

The input terminals 61-1 and 62-1 that make up a plug of the equipment 14-1 are connected to the output terminals 51-1 and 52-1 of the power plug adapter 13-1. Accordingly, the output power that has been relayed from the power plug adapter 13-1 is supplied to the equipment 14-1 via the power lines 81-1 and 82-1. Similarly, the input terminals 61-11 and 62-11 that make up a plug of the equipment 14-2 are connected to the output terminals 51-11 and 52-11 of the power plug adapter 13-2. Accordingly, the output power that has been relayed from the power plug adapter 13-2 is supplied to the equipment 14-2 via the power lines 81-11 and 82-11.

The equipment 14-1 and 14-2 operated by the supplied power execute predetermined operations, based on the supplied output power. For example, if an electric lamp, lighting is performed, and if a personal computer, accessing various types of websites via the Internet and processing to create writings are performed.

The home server 15 communicates wirelessly with the power gateway 12 using a standard such as Bluetooth (registered trademark) or the like, holds accounting information, and performs accounting processing. It goes without saying that IEEE802.11, IEEE802.15, or another standard may be used, or communication by cable may be used.

### [Configuration of Power Gateway]

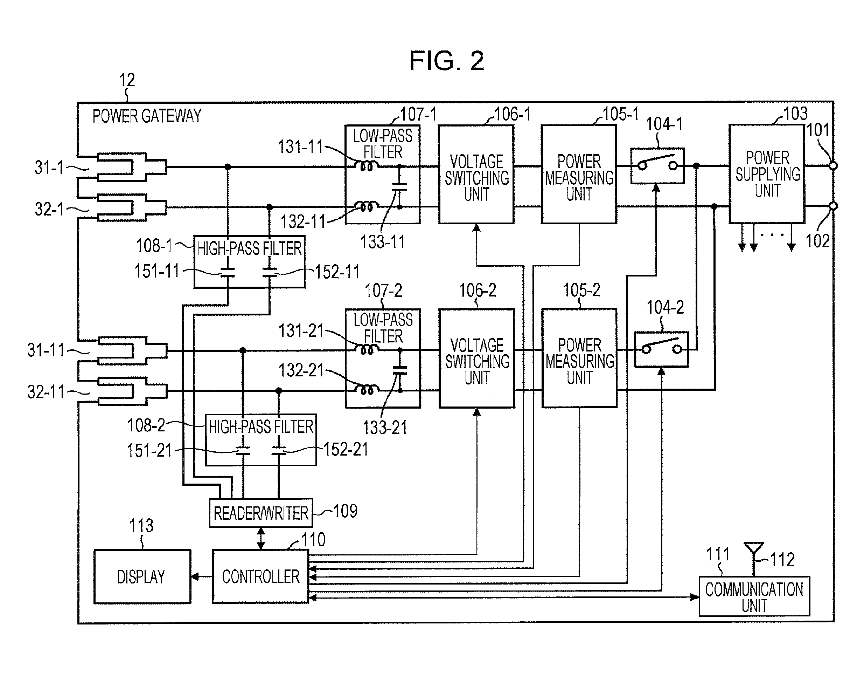

Fig. 2 is a block diagram illustrating a configuration of an embodiment of the power gateway 12. The power gateway 12 in Fig. 2 is made up of a power supply unit 103, switches 104-1 and 104-2, power measuring units 105-1 and 105-2, voltage switching units 106-1 and 106-2, low-pass filters 107-1 and 107-2, high-pass filters 108-1 and 108-2, reader/writer 109, controller 110, communication unit 111 which has an antenna 112, and a display 113.

The power lines 71 and 72 are connected to the terminals 101 and 102, respectively, which are input terminals, and AC power from the external power source 11 is input. The power supply unit 103 outputs the AC power input from the terminals 101 and 102 at a later stage, and supplying power needed for various parts within the power gateway 12. That is to say, the power supply unit 103 supplies power needed for the power measuring unit 105, voltage switching unit 106, reader/writer 109, controller 110, communication unit 111, display 113, and so forth.

When switches 104-1 and 104-2, of which switching is controlled by the controller 110, are turned on, the AC power output from the power supply unit 103 outputs the power measuring units 105-1 and 105-2 of the power lines corresponding thereto, and blocks power from being supplied when turned off. The power measuring units 105-1 and 105-2 measure the power supplied to the corresponding power lines, and output the measurement results to the controller 110.

The voltage switching units 106-1 and 106-2 generate AC power or DC power of a predetermined voltage from the AC power input via the respective power measuring units 105-1 and 105-2, and output this as output power.

The low-pass filter 107-1 outputs the output power input from the voltage switching unit 106-1 of the power line thereof to the output terminals 31-1 and 32-1. Similarly, the low-pass filter 107-2 outputs the output power input from the voltage switching unit 106-2 of the power line thereof to the output terminals 31-11 and 32-11. The low-pass filter 107 outputs low frequency output power, which is output from the voltage switching unit 107, to the output terminals 31 and 32, while preventing the high frequency signal having a frequency higher than the output power, which is output from the reader/writer 109, from being input into the voltage switching unit 106 and the voltage switching unit 106 malfunctioning.

In the case of this embodiment, the low-pass filter 107-1 is made up of a coil 131-11 that is inserted into one of the power lines, a coil 132-11 that is inserted into the other power line, and a capacitor 133-11 that connects a pair of power lines. Similarly, the low-pass filter 107-2 is made up of a coil 131-21 that is inserted into one of the power lines, a coil 132-21 that is inserted into the other power line, and a capacitor 133-21 that connects a pair of power lines. The configuration of the low-pass filter 107 may be a configuration other than this.

The output terminals 31-1 and 32-1 are connected to the reader/writer 109 via the high-pass filter 108-1. Similarly, the output terminals 31-11 and 32-11 are connected to the reader/writer 109 via the high-pass filter 108-2. The high-pass filter 108 outputs the high frequency signal output from the reader/writer 109 to the output terminals 31 and 32, while preventing a low frequency output voltage that is output from the voltage switching unit 106 from being input into the reader/writer 109, and the reader/writer 109 malfunctioning.

In the case of this embodiment, the high-pass filter 108-1 is made up of a capacitor 151-11 that is inserted between the reader/writer 109 and one of the power lines, and a capacitor 152-11 that is inserted between the reader/writer 109 and the other power line. Similarly, the high-pass filter 108-2 is made up of a capacitor 151-21 that is inserted between the reader/writer 109 and one of the power lines, and a capacitor 152-21 that is inserted between the reader/writer 109 and the other power line. It goes without saying that the configuration of the high-pass filter 108 is not limited to these.

The reader/writer 109 communicates with the power plug adapter 13. Various types of information are displayed on the display 113 by way of the controller 110. The controller 110 controls the reader/writer 109. The communication unit 111 communicates wirelessly with the home server 15 via the antenna 112. The reader/writer 109 internally has a switching switch which is not shown in the diagram, performs connections with the high-pass filters 108-1 and 108-2 alternately in a time-series manner, and can identify which of the output terminals 31-1 and 32-1 or output terminals 31-11 and 32-11 are connected to the power plug adapter 13, depending on at which timing the information of the power plug adapter 13 has been read. Alternatively, which of the output terminals 31-1 and 32-1 or output terminals 31-11 and 32-11 are connected to the power plug adapter 13 may be identified using a method other than switching connections in a time-series manner.

### [Voltage Switching Unit]

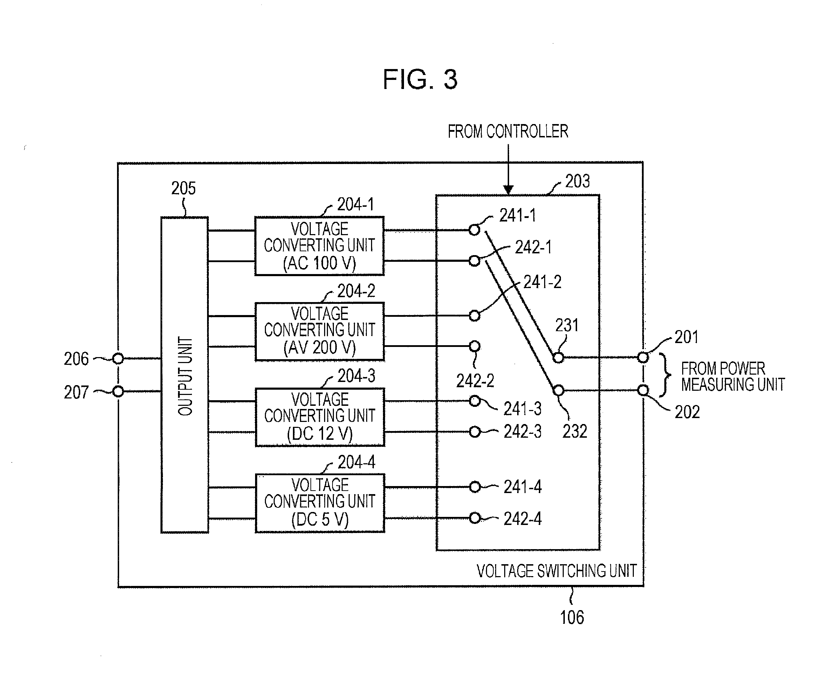

Fig. 3 is a block diagram illustrating a configuration of an embodiment of the voltage switching unit 106.

The voltage switching unit 106 has a switch 203, voltage converters 204-1 through 204-4, and an output unit 205. AC power from the power measuring unit 105 is input into terminals 231 and 232 of the switch 203 via the terminals 201 and 202. The terminal 231 is switched to one of contact points 241-1 through 241-4. Similarly, the terminal 232 is switched to one of contact points 241-1 through 241-4. The switching of terminals 231 and 232 are simultaneously performed by the controller 110. With the switching herein, AC power is selectively input into one of the voltage converters 204-1 through 204-4.

The voltage converter 204-1 converts the input AC power (or DC power may be used. The same applies below.) to 100 V AC power, and outputs this. The voltage converter 204-2 converts the input AC power to 200 V AC power, and outputs this. The voltage converter 204-3 converts the input AC power to 12 V DC power, and outputs this. The voltage converter 204-4 converts the input AC power to 5 V DC power, and outputs this. Note that the voltages to be converted and the numbers thereof are not limited to this example. The output unit 205 outputs the AC power or DC power input from the voltage converters 204-1 through 204-4 to the low-pass filter 107 from the output terminals 206 and 207 as output power. The switching of voltage is controlled by the controller 110.

### [Configuration of Reader/Writer 109]

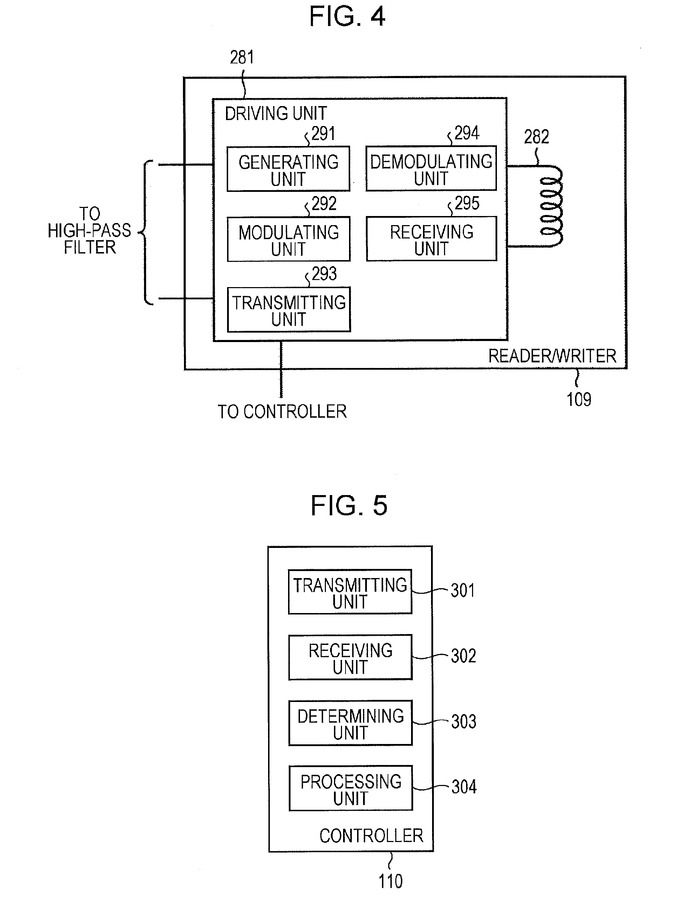

Fig. 4 is a block diagram illustrating a configuration of an embodiment of the reader/writer 109. The reader/writer 109 serving as a communication unit has a driving unit 281 and coil 282. The driving unit 281 has a function block of a generating unit 291, modulating unit 292, transmitting unit 293, demodulating unit 294, and receiving unit 295.

The generating unit 291 generates a command. The modulating unit 292 modulates a carrier wave by a command, and outputs as a high frequency signal. A high frequency signal (also called RF signal) having a frequency of 13.56 MHz, for example, may be used as the carrier wave. Besides 13.56 MHz, optional frequencies such as 130 kHz to 135 kHz, 433 MHz, 900 MHz band, 2.45 GHz, can be used as the high frequency signal. The transmitting unit 293 outputs a high frequency signal and other signals.

The demodulating unit 294 demodulates the reflective wave of the high frequency signal by load modulation from the power plug adapter 13. The receiving unit 295 receives various types of signals.

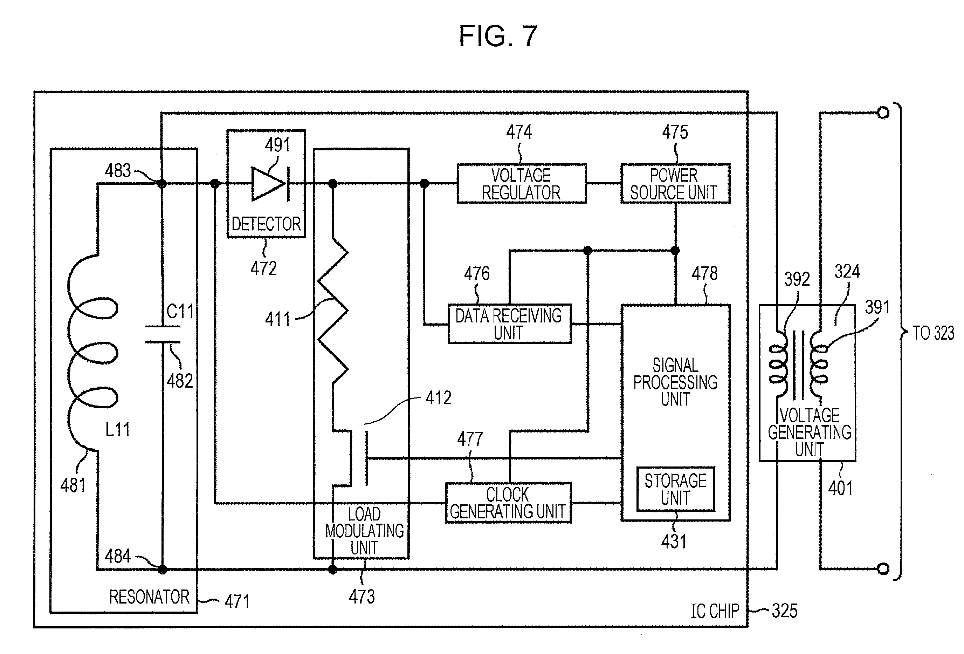

The coil 282 of the reader/writer 109 originally has been electromagnetically coupled with a coil 481 of the IC chip 325 which will be described later with reference to Fig. 7, the purpose of which has been to transfer high frequency signals between the reader/writer 109 and IC chip 325. That is to say, the reader/writer 109 is provided to write in and read out information corresponding to the standard of the IC chip 325. However, according to the present embodiment, the high frequency signal is transferred via the power lines, so the coil 282 can be omitted. Thus, there is less concern of the coil 282 radiating unnecessary electromagnetic waves in the periphery or picking up noise and performing erroneous operations.

### [Configuration of Controller]

Fig. 5 is a block diagram illustrating a configuration of an embodiment of the controller 110. The controller 110 serving as a control unit that is made up of an MPU (Micro Processor Unit), CPU (Central Processing Unit), or the like, for example, has a function block of a transmitting unit 301, receiving unit 302, determining unit 303, and processing unit 304.

The transmitting unit 301 transmits a command to the reader/writer 109. The receiving unit 302 receives a signal corresponding to the signal received from the power plug adapter 13, which is transmitted by the reader/writer 109. The determining unit 303 executes various types of determining processing. The processing unit 304 executes processing corresponding to the signal received from the power plug adapter 13 via the reader/writer 109.

### [Power Plug Adapter]

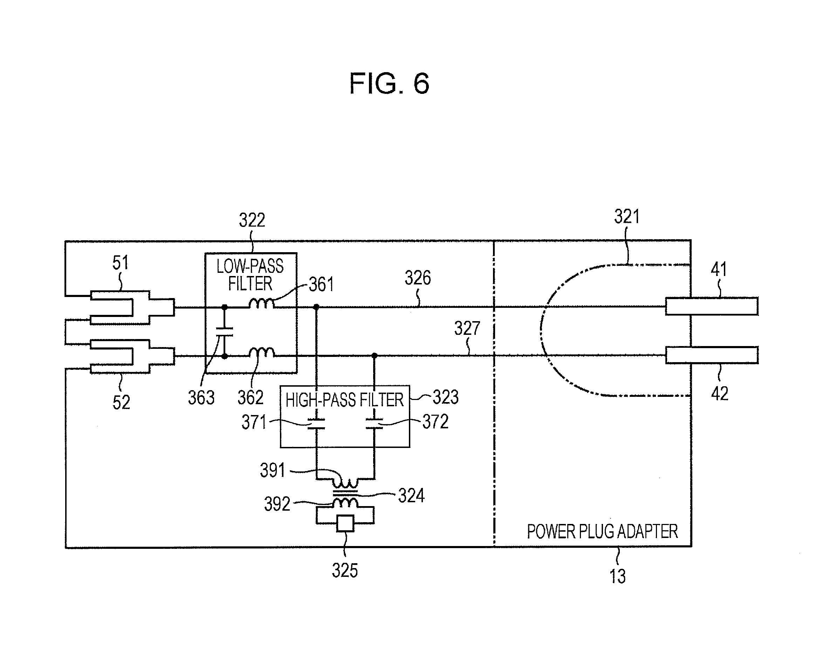

Fig. 6 is a block diagram illustrating a configuration of an embodiment of the power plug adapter 13. The power plug adapter 13 herein has input terminals 41 and 42, low-pass filters 322 and 323, a transformer 324, IC chip 325, and output terminals 51 and 52.

According to the present embodiment, the input terminals 41 and 42 are formed so as to be integrated with the power plug adapter 13, and with the tips thereof protruding. However, the input terminals 41 and 42 may also be formed so as to be integrated with the power line plug 321, the power line plug 321 connected with the power plug adapter 13 via long power lines 326 and 327, and the power line plug 321 separated from the power plug adapter 13.

The output power from the power gateway 12 which is supplied from the input terminals 41 and 42 that are connected to the output terminals 31 and 32 of the power gateway 12 are output from the output terminals 51 and 52 via the low-pass filter 322. That is to say, the power plug adapter 13 relays and outputs the output power from the power gateway 12 to the equipment 14. A high-pass filter 323 is connected to the input terminals 41 and 42 via the power lines 326 and 327, and the high-pass filter 323 is further connecting to one of the coils 391 of the transformer 324. The other coil 392 of the transformer 324 is connected to the IC chip 325.

In the case of the present embodiment, the low-pass filter 322 is made up of a coil 361 that is inserted in one of the power lines 326, a coil 362 that is inserted in the other power line 327, and a capacitor 363 that is between and connects the pair of power lines 326 and 327. It goes without saying that the configuration of the low-pass filter 322 is not limited to this.

In the case of the present embodiment, the high-pass filter 323 is made up of a capacitor 371 that is connected to one of the power lines 326 and a capacitor 372 that is connected to the other power line 327. It goes without saying that the configuration of the high-pass filter 323 is not limited to this.

The low-pass filter 322 outputs the output power of a low frequency input from the input terminals 41 and 42 to the output terminals 51 and 42, while preventing the high frequency signal input from the input terminals 41 and 42 from being input into the output terminals 51 and 52. However, in the case of connecting the equipment 14 in which a storage device is housed to the power plug adapter 13, and the power gateway 12 reading and writing information in the storage device of the equipment 14, with the power plug adapter 13 as a relay, the low-pass filter 322 is not installed so that the high frequency signals pass through the power plug adapter 13.

The high-pass filter 323 supplies the high frequency signal input from the input terminals 41 and 42 to the IC chip 325 via the transformer 324, while preventing the output power of the low frequency input from the input terminals 41 and 42 from being input into the IC chip 325 via the transformer 324.

### [IC Chip 325]

Fig. 7 is a block diagram illustrating a configuration of an embodiment of the IC chip 325. The transformer 324 connected to the IC chip 325 makes up a voltage generating unit 401.

That is to say, up the high frequency signal from the power plug adapter 13 being input into the coil 391, voltage is induced in the electromagnetically coupled coil 392, and is supplied to voltage supply points 483 and 484. That is to say, in the case of the present embodiment, voltage is generated by the voltage generating unit 401 (both the resonator 471 and voltage generating unit 401, in the case of not omitting the resonator 471), whereby voltage can be reliably generated.

The IC chip 325 serving as a storage device may be made up of an IC chip, electronic tag such as a tag, or the like based on various types of standards. For example, it goes without saying that standards such as RFID (Radio Frequency Identification), Mifare, FeliCa, NFC (Near Field Communication) (each of these are registered trademarks), and so forth may be prepared, and also electronic tags of a unique configuration not based on these standards may also be prepared. The storage device has at least a function to read out and output the information stored within by highfrequency signals, and further it is preferable to have a function to store supplied information. Either a passive type or active type may be used.

The IC chip 325 in Fig. 7 is made up of a resonator 471, detector 472, load modulating unit 473, voltage regulator 474, power source unit 475, data receiving unit 476, clock generating unit 477, and signal processing unit 478.

The resonator 471 is made up of a coil 481 of which the inductance function as an antenna is L11, and a capacitor 482 of which the capacity is C11, with a parallel resonating circuit. One of the connecting points of the coil 481 and capacitor 482 is a positive voltage supply point 483, and the other connecting point is a negative voltage supply point 484. The values of the inductance L11 and capacity C11 are set so that the resonance frequency is 13.56 MHz. That is to say, the resonator 471 having the coil 481 has originally had a function to receive the high frequency signal of 13.56 MHz from the coil 282 function as the antenna of the reader/writer 109 illustrated in Fig. 4, and generate AC induced voltage from electromagnetic induction.

However, in the case of the present embodiment, the high frequency signal having a frequency of 13.56 MHz is not supplied from the coil 282 of the reader/writer 109, and is supplied from the power gateway 12 via the power lines 326 and 327, high-pass filter 323, and transformer 324. Now, it is favorable to omit the resonator 471, or at least the coil 481 thereof. Thus, erroneous operations from the influence of metal in the vicinity or the like are suppressed. In this case the high frequency signal is directly input into the detector 72. In the case of not omitting the resonator 471, the resonator 471 resonates accordingly when the high frequency signal having a frequency of 13.56 MHz is input, and generates voltage from the voltage supply points 483 and 484.

In the case of the present embodiment, the detector 472 is made up of a diode 491. An anode of the diode 491 is connected to a positive voltage supply point 483, and the cathode thereof is connected to one end of a resistor 411 of the load modulating unit 473. The diode 491 rectifies the high frequency signal from the voltage supply points 483 and 484 to a DC voltage, and demodulates the signal which includes the high frequency signal transmitted from the reader/writer 109 (the carrier wave). One end of an FET (Field Effect Transistor) 412 which makes up the load modulating unit 473 together with the resistor 411, is connected to the other end of the resistor 411, and the other end of the FET 412 is grounded. Note that the FET 412 serving as a switching device may be p-channel or n-channel. Also, a bipolar transistor can be used. The resistor 411 may be another impedance device.

The voltage regulator 474 smoothes the voltage that has been rectified by the diode 491, causes this to be a constant voltage, and supplies this to the power source unit 475. The power source unit 475 generates voltage to drive the IC chip 325, and supplies this to the data receiving unit 476, clock generating unit 477, signal processing unit 478, and so forth.

The data receiving unit 476 extracts low frequency components from half-wave rectified voltage that is output from the diode 491 (amplitude demodulation), amplifies this, generates a data signal binarized at a high level and low level, and supplies this to the signal processing unit 478. The clock generating unit 477 generates a rectangular clock signal from the high frequency signal supplied from the voltage supply point 483 of the resonator 471, and supplies this to the signal processing unit 478.

The signal processing unit 478 reads the data signal so as to be synchronized with the clock signal. The signal processing unit 478 then generates a response signal binarized at a high level and low level, based on the power information stored in the built-in storage unit 431, and outputs this to the gate of the FET 412. The FET 412 is turned on or off according to the response signal. Thus, load modulation is performed to change the impedance as seen from the voltage supply points 483 and 484. Note that at least identifying information is included in the power information, but as described later, specification information, history information, billing information, user information, and the like can also be included. Each user has one dedicated power plug adapter 13 for himself/herself. Accordingly, the power information stored in the IC chip 325 of the power plug adapter 13 is information unique to each user.

### [Voltage Generating Unit 401 (1)]

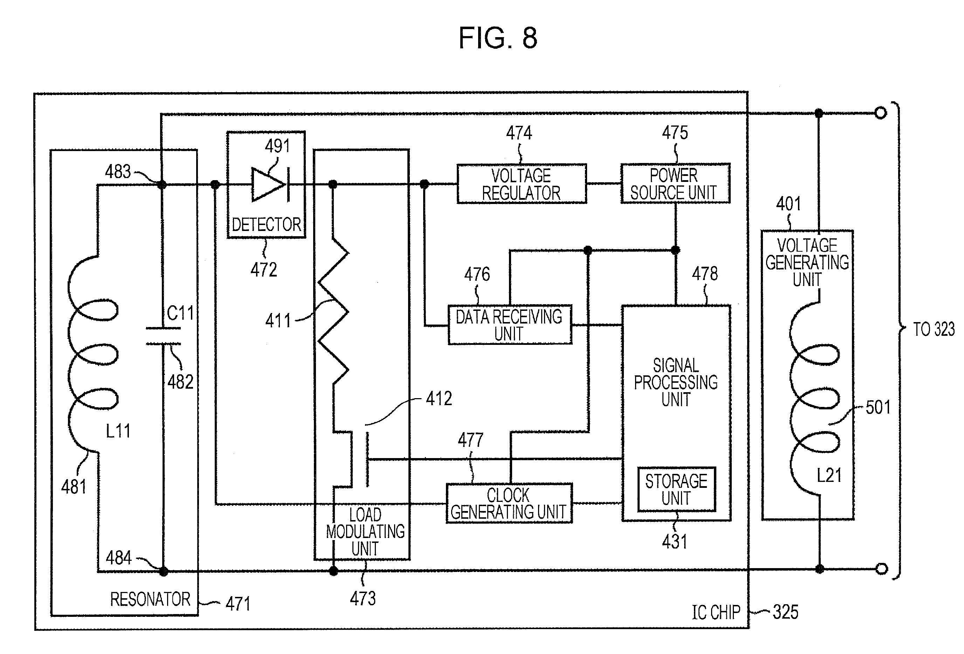

Fig. 8 is a block diagram illustrating a configuration of an embodiment of another voltage generating unit 501. In the case of this embodiment, the voltage generating unit 401 is made up of a coil 501 having an inductance of L21. Upon a high frequency signal being input from the power plug adapter 13, the coil 501 generates voltage, and supplies this to the voltage supply points 483 and 484.

The configuration is otherwise similar to the case in Fig. 7, and the description thereof will be a repeat so will be omitted. That is to say, in the case of this embodiment also, voltage is generated by the voltage generating unit 401 (both the resonator 471 and voltage generating unit 401 in the case of not omitting the resonator 471), whereby voltage can be reliably generated.

### [Voltage Generating Unit 401 (2)]

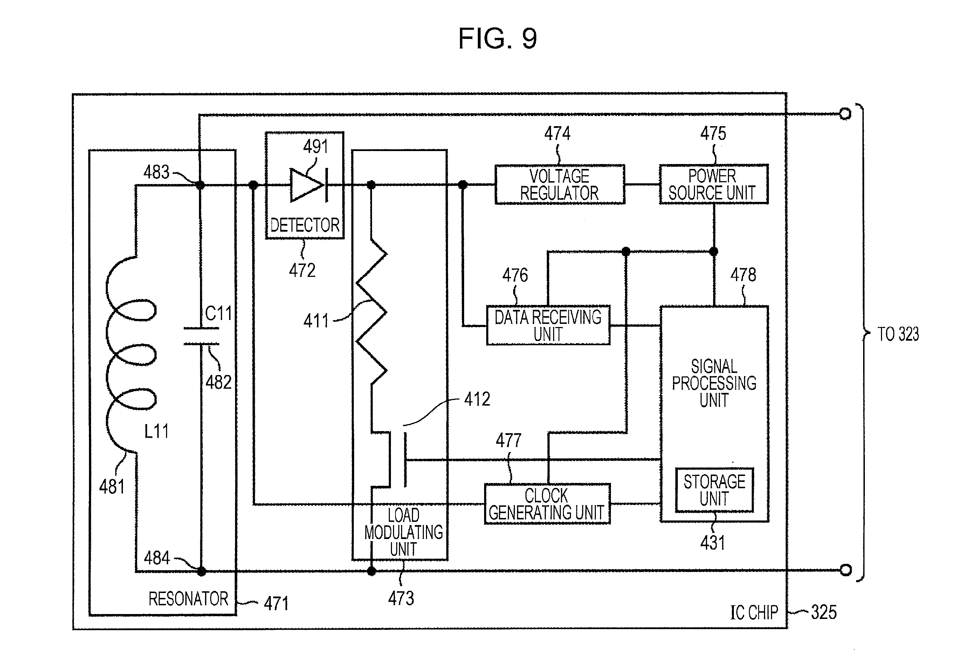

Fig. 9 is a block diagram illustrating yet another configuration of an embodiment of a voltage generating unit 401. According to this embodiment, the voltage generating unit 401 is omitted. Accordingly, according to this embodiment, the high frequency signal from the voltage supply points 483 and 484 are directly input into the detector 472. The configuration is otherwise similar to the case in Fig. 7, and the description thereof will be a repeat so will be omitted.

### [Home Server 15]

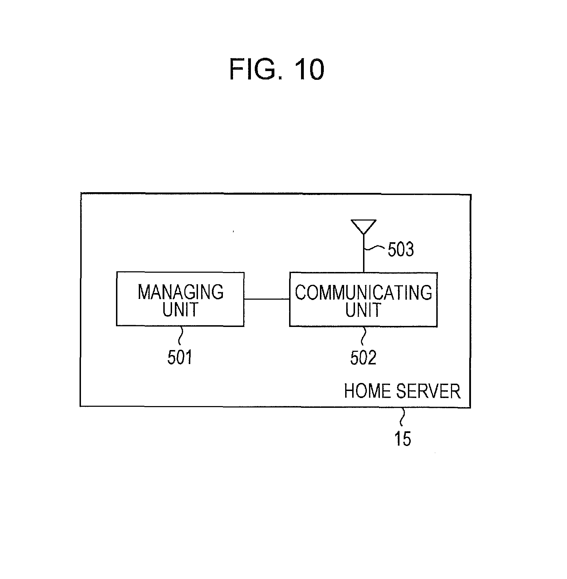

Fig. 10 is a block diagram illustrating a configuration of an embodiment of a home server 15. According to this embodiment, the home server 15 is made up of a managing unit 501 and a communication unit 502 which has an antenna 503.

The managing unit 501 stores and manages power information. The communication unit 502 communicates with the communication unit 111 of the power gateway 12 via the antenna 503.

### [Authentication Processing of Power Supply Control System]

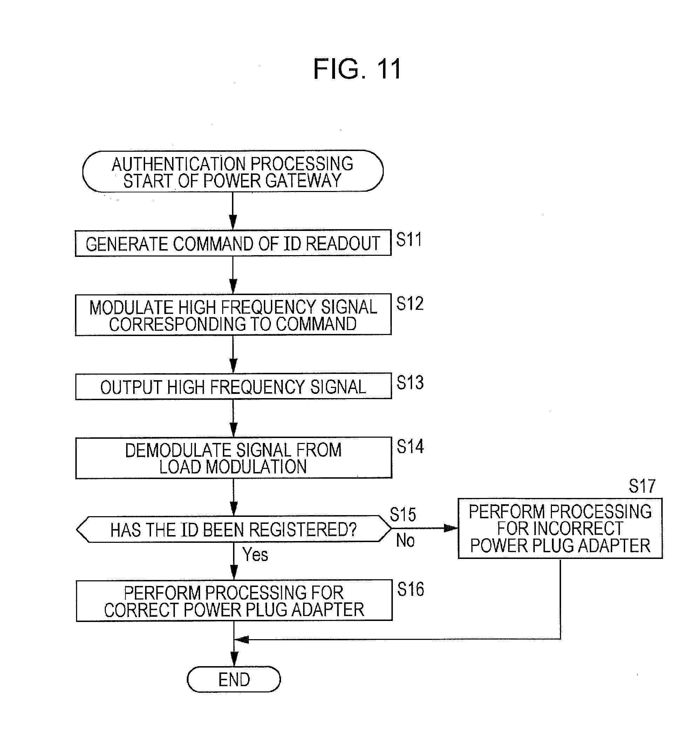

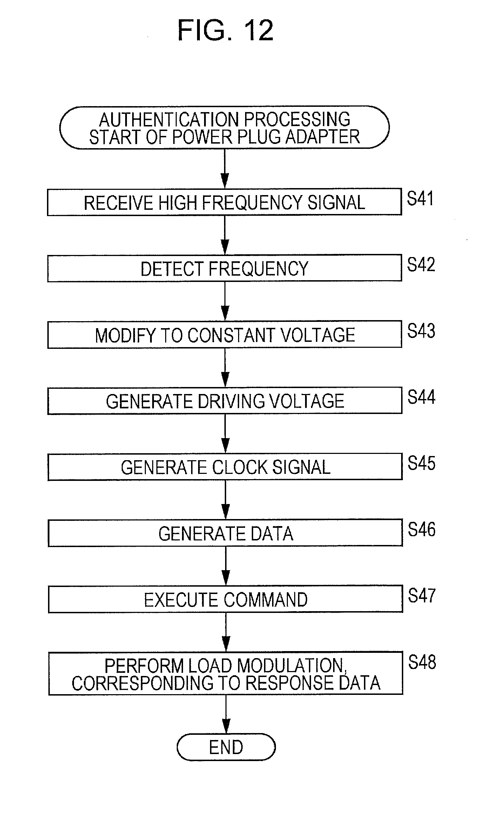

Fig. 11 is a flowchart describing the authentication processing of the power gateway 12, and Fig. 12 is a flowchart describing the authentication processing of the power plug adapter 13 corresponding thereto. Next, the authentication processing performed with the power supply control system 1 in Fig. 1 will be described with reference to the flowcharts in Fig. 11 and Fig. 12 herein. The authentication processing herein is executed when the power plug adapter 13 is attached to the power gateway 12 or when a user commands the processing to be started.

In step S11 in Fig. 11, processing is executed for an ID readout command to be generated by the power gateway 12. That is to say, as described above, an ID (Identifier) serving as identification to identify oneself is stored in the storage unit 431 of the signal processing unit 478 which the IC chip 325 of the power plug adapter 13 has. The transmitting unit 301 of the controller 110 of the power gateway 12 generates a command to read out the identification information herein and transmit this to the reader/writer 109.

In step S12, the reader/writer 109 modulates the high frequency signal serving as a high frequency signal, corresponding to the command from the controller 110. That is to say, the receiving unit 295 of the reader/writer 109 receives the command from the controller 110. The generating unit 291 generates a command as to the IC chip 325 corresponding to the command from the controller 110. The modulating unit 292 subjects the carrier wave having a frequency of 13.56 MHz serving as the high frequency signal to amplitude modulation, corresponding to the generated command. Alternatively, ASK modulation or FSK modulation may be used. In step S13 the transmission unit 293 outputs the high frequency signal.

The high frequency signal output from the reader/writer 109 passes through the high-pass filter 108, is transmitted to the power line, and output from the output terminal 31. At this time, the low-pass filter 107 blocks the high frequency signal, so the high frequency signal is not input into the voltage switching unit 106. Accordingly, the voltage switching unit 106 which operates with AC power of a low frequency from the power supply unit 103 is prevented from failing. The low-pass filter 107 also has a function to prevent high frequency noise from leaking out. In the case that AC of a low frequency that is output from the voltage switching unit 106 is flowing to the power line, the high frequency signal is superimposed on the AC.

The high frequency signal output from the output terminal 31 of the power gateway 12 is input into the power plug adapter 13 from the input terminal 41 which is connected to the output terminal 31, and is transmitted to the power lines 326 and 327. Further, the high frequency signal herein is input into the transformer 324 via the high-pass filter 323. The transformer 324 inputs the input high frequency signal into the IC chip 325.

In step S41 in Fig. 12 the IC chip 325 receives the high frequency signal. That is to say, the induced voltage that is generated by the voltage generating unit 401 is supplied to the voltage supply points 483 and 484. In the case that a resonator 471 exists, the frequency of the carrier wave of the high frequency signal matches the resonance frequency of the resonator 471, whereby the resonator 471 resonates to the high frequency signal, and a resonance voltage is induced at the voltage supply points 483 and 484.

In step S42 the diode 491 detects the input high frequency voltage. That is to say, the AC high frequency voltage is rectified, and DC (more accurately, pulsating current) voltage is generated. In step S43 the voltage regulator 474 smoothes the rectified voltage and causes a constant voltage. In step S44 the power source unit 475 generates driving voltage from the voltage that has become constant voltage. The generated driving voltage is supplied to the data receiving unit 476, clock generating unit 477, signal processing unit 478, and so forth.

In step S45 the clock generating unit 477 generates a rectangular clock signal from the input high frequency voltage. The clock signal is supplied to the signal processing unit 478. In step S46 the data receiving unit 476 generated data. That is to say, signal components (i.e. amplitude components) included in the high frequency voltage (i.e. carrier wave) are extracted from the signal that has been rectified by the diode 491, and are amplified. Thus, data signal that is binarized at a high level and low level is generated, and supplied to the signal processing unit 478.

In step S47 the signal processing unit 478 executes a command. That is to say, the signal processing unit 478 reads the command from the data signal so as to be synchronized with the clock signal, and executes processing corresponding to the read command. In the present case, an ID stored in the storage unit 431 is read out, and response data is generated. The response data herein is also binarized.

In step S48 the signal processing unit 478 performs load modulation corresponding to the response data. That is to say, the FET 412 is turns on or off, corresponding to the response data generated by the processing in step S47. In the state of the FET 412 being turned on, and in the state of being turned off, the impedance as seen from the voltage supply points 483 and 484 differs. The change in impedance herein is reflected in a reflective wave of the high frequency signal, and is transmitted to the power gateway 12 via the transformer 324, high-pass filter 323, power lines 326 and 327, and input terminals 41 and 42.

The reflective wave input in the power gateway 12 from the output terminal 31 is input into the reader/writer 109 via the high-pass filter 108. In step S14 in Fig. 11, the receiving unit 295 of the reader/writer 109 receives the signal of the reflective wave generated by the load modulation of the high frequency signal. The demodulator 294 then demodulates the received high frequency signal. Thus, the ID of the power plug adapter 13 is read out. The transmitting unit 293 transmits the received and modulated ID to the controller 110. The receiving unit 302 of the controller 110 receives the ID from the reader/writer 109.

In step S15 the determining unit 303 of the controller 110 determines whether or not the ID read out is the registered ID. That is to say, a predetermined ID is assigned to the power plug adapter 13 beforehand, and the determining unit 303 stores the assigned ID herein. Whether or not the ID read out matches the registered ID is determined.

In the case that the ID read out matches the registered ID, i.e. upon the power plug adapter 13 being authenticated, in step S16 the processing unit 304 performs processing as a normal power plug adapter. In the case of this embodiment, for example the processing unit 304 turns on the power line switch 104 of the power plug adapter 13 that is connected to the output terminal 31 that has read the ID. Also, in the case that specification information is stored in the IC chip 325 of the power plug adapter 13 as power information, the specification information is read out. The processing unit 304 switches the switch 203 of the voltage switching unit 106, based on the specification information herein, so that the output power within a permitted range is output to the power plug adapter 13. For example, in the case that the power plug adapter 13 permits an output of 100 V AC voltage, the switch 203 is switched so that the voltage converter 204-1 of the voltage switching unit 106 is selected. Note that the specification information can also be stored in the storage device of the equipment 14.

Thus, in the case that an electric lamp for lighting, serving as the equipment 14, is connected to the output terminals 51 and 52 of the power plug adapter 13, 100 V AC power is supplied thereto, whereby the user can use the electric lamp.

That is to say, with the power gateway 12, the power supply unit 103 supplies the AC power input from the external power source 11 to the switch 104, power measuring unit 105, and voltage switching unit 106. The 100 V output power generated by the voltage converter 204-1 of the voltage switching unit 106 is output from the output terminal 31 via the low-pass filter 107.

With the power plug adapter 13, the output power input from the input terminals 41 and 42 is relayed to the output terminal 51 via the power lines 326 and 327 and the low-pass filter 322. The electric lamp is connected to the output terminals 51 and 52, whereby the output power is supplied to the electric lamp.

In the case of the user using the electric lamp, power is consumed at that point. The power measuring unit 105 of the power line connected to the electric lamp measures the power consumption, and transmits the measurement results to the controller 110. Upon the receiving unit 302 of the controller 110 receiving the measurement results herein, the measurement results are correlated with date and time information, and history information is generated. The history information is transmitted to the IC chip 325, and stored as power information in the storage unit 431. Billing processing is executed based on the history information herein. Details of the billing processing will be described later.

Conversely, in step S15, in the case that the ID read out is not determined to match the registered ID, in step S17 the processing unit 304 performs processing as an invalid power plug adapter. In the case that which is connected to the power gateway 12 is electronic equipment other than the power plug adapter 13, even if that which is connected is the power plug adapter 13, in the case that billing information needed for billing processing has not be stored, and in the case of a power plug adapter 13 of a user that has delayed payment for a fixed amount of time or longer, processing is performed as an invalid power plug adapter.

As processing as an invalid power plug adapter, for example the processing unit 304 turns off the switch 104 and inhibits the supply of power to the power plug adapter 13. Further, the processing unit 304 displays a predetermined warning message on the display 113. This message may be a message such as "The device connected is not a power plug adapter. Please exchange with a power plug adapter" or "Information needed for billing processing is not stored". In accordance with the message, the user may exchange the connected device for a power plug adapter 13, or as described later, may store the information needed for billing in the power plug adapter 13 held by the user.

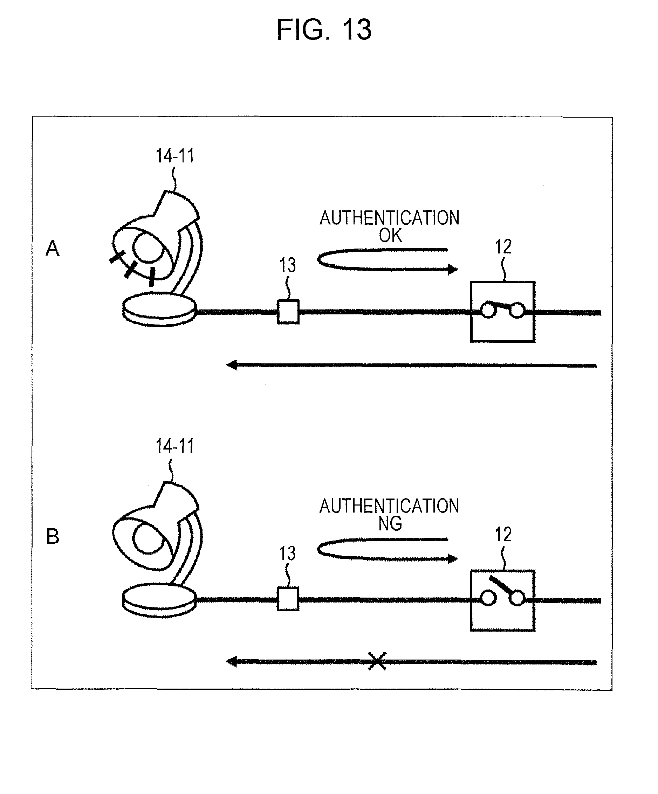

Fig. 13 is a diagram describing processing that is based on authentication. As illustrated in Fig. 13, when desiring to use the equipment 14, the user connects his/her own power plug adapter 13 to the power gateway 12. The user then connects the equipment 14 to be used to the power plug adapter 13. In Fig. 13, an electric lamp 14-11 is connected as the equipment 14.

As illustrated in A of Fig. 13, in the case that the power plug adapter 13 is authenticated by the power gateway 12, the processing in step S16 in Fig. 11 is performed. That is to say, power is supplied to the power plug adapter 13 from the power gateway 12. Accordingly, the user can connect the electric lamp 14-11 to the power plug adapter 13, which will receive power supply from the power plug adapter 13, and the electric lamp 14-11 can be used. According to the amount of power consumed, billing processing for power fees is performed as to the user of the power plug adapter 13 thereof.

As illustrated in B of Fig. 13, in the case that the power plug adapter 13 is not authenticated by the power gateway 12, the processing in step S17 in Fig. 11 is performed. In other words, in this case, even if the electric lamp 14-11 is connected to the power plug adapter 13, the power plug adapter 13 does not relay and output the output power. Accordingly, the user cannot use the electric lamp 14-11. Thus, invalid power use is prevented.

Thus, multiple users sharing the same living space, for example, may each have a dedicated power plug adapter 13, and use the equipment 14 via their own power plug adapters 13. Consequently, the power amount consumed in the living space thereof can be managed by each user.

### [Storage of Power Information]

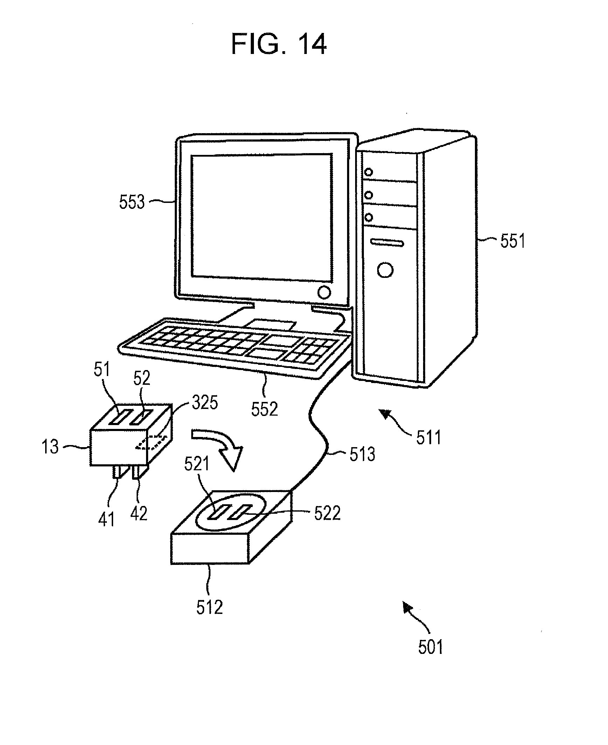

The user stores his/her own power information in his/her own power plug adapter 13. Fig. 14 is a diagram illustrating a configuration of an embodiment of a system in the case of storing power information. The power information storage system 501 herein is made up of a personal computer 511 and a reader/writer equipment 512. According to this example, the reader/writer equipment 512 is connected to the personal computer 511 by a USB (Universal Serial Bus) cable 513.

The personal computer 511 is made up of a main unit 551, keyboard 552, and display 553.

In the case of storing power information in the power plug adapter 13, the user connects the input terminals 41 and 42 that make up the plug thereof to the terminals 521 and 522 that make up the outlet of the reader/writer equipment 512.

### [Reader/Writer Equipment]

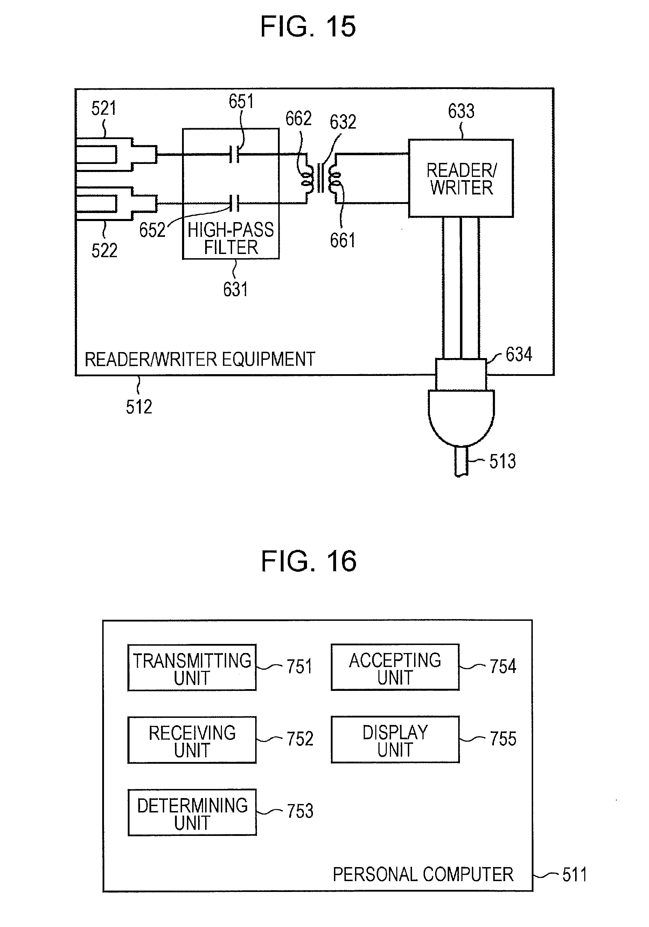

Fig. 15 is a block diagram illustrating a configuration of an embodiment of the reader/writer equipment 512. The reader/writer equipment 512 has an internal reader/writer 633, as well as a high-pass filter 631 and transformer 632. One coil 661 of the transformer 632 is connected to the reader/writer 633, and the other coil 662 is connected to the terminals 521 and 522 via the capacitors 651 and 652 that make up the high-pass filter 631. Also, the reader/writer 633 is connected to the reader/writer equipment 512 by a USB connector 634. Note that in the case of the configuration in Fig. 15, AC 100 V is not applied to the reader/writer 633, so the high-pass filter 631 can be omitted.

The functional configuration of the reader/writer 633 is basically similar to the reader/writer 109 illustrated in Fig. 4, so hereinafter, Fig. 4 may be referenced appropriately also as a functional configuration of the reader/writer 633.

### [Functional Configuration of Personal Computer]

Fig. 16 is a block diagram illustrating a functional configuration of the personal computer 511. The personal computer 511 has a transmitting unit 751, receiving unit 752, determining unit 753, accepting unit 754, and display unit 755.

The transmitting unit 751 transmits various types of signals. The receiving unit 752 receives various types of signals. The determining unit 753 executes various types of determining processes. The accepting unit 754 accepts input from the keyboard 552 and an unshown mouse or the like. The display unit 755 displays various types of information on the display 553.

### [Storage Processing]

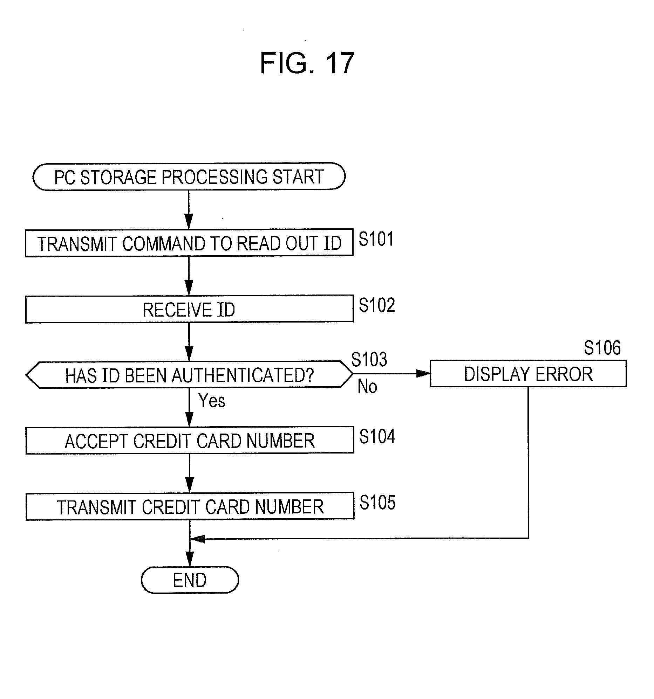

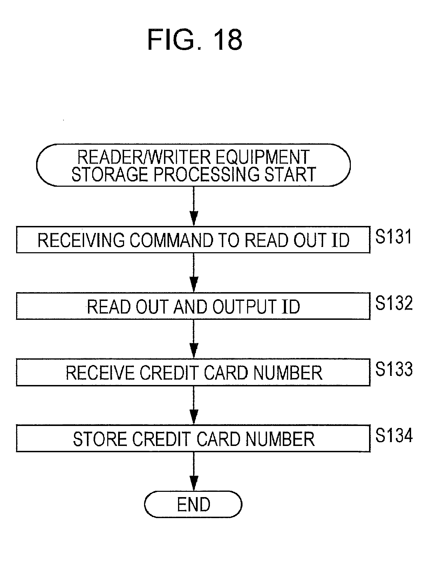

Fig. 17 is a flowchart describing the storage processing of the personal computer 511, and Fig. 18 is a flowchart describing the storage processing of the reader/writer equipment 512. The storage processing of the power information storage system 501 will be described below with reference to these diagrams. The processing herein is started when the user instructs the start of processing, or when the reader/writer equipment 512 is connected to the main unit 551 of the personal computer 511.

In step S101 of Fig. 17, the transmission unit 751 of the personal computer 511 transmits a command to read out an ID as to the reader/writer equipment 512. The command herein is transmitted to the reader/writer equipment 512 via the USB cable 513.

In step S131 in Fig. 18, at the reader/writer 633 of the reader/writer equipment 512, the receiving unit 295 receives the ID readout command. In step S132, processing is executed to read out and output the ID. The processing in this case is similar to the case described with reference to Fig. 11 and Fig. 12, so the description will be simplified.

That is to say, a command is generated by the generating unit 291 to read out the ID from the IC chip 325 that is housed in the power plug adapter 13, and a command by high frequency signal is transmitted by the transmitting unit 293. The command herein is input into the transformer 632, high-pass filter 631, terminals 521 and 522, and power plug adapter 13. In the power plug adapter 13, the command thereof is input into the IC chip 325 from the input terminals 41 and 42, via the power lines 326 and 327, the high-pass filter 323, and the transformer 324.

Within the IC chip 325, the signal processing unit 478 executes the input command. That is to say, the ID stored in the storage unit 431 is read out, and transmitted by performing load modulation.

The readout signal herein is output from the power plug adapter 13, via the transformer 324, high-pass filter 323, power lines 326 and 327, and input terminals 41 and 42.

The signal output from the power plug adapter 13 is input into the reader/writer equipment 512 from the terminals 521 and 522. The signal herein is input into the reader/writer 633 via the high-pass filter 631 and transformer 632. Upon the receiving unit 295 of the reader/writer 633 receiving the signal, the transmitting unit 293 outputs the signal to the personal computer 511.

The receiving unit 752 of the personal computer 511 receives the signal input via the USB cable 513. That is to say, therefore in step S102 in Fig. 17, processing to receive the ID is executed.

In step S103, the determining unit 753 authenticates the ID. The determining unit 753 determines whether or not the ID has been authenticated. That is to say. Determination is made as to whether or not the power plug adapter 13 is an appropriate power plug adapter 13 that can be used in the power supply control system 1. In the case that the ID is authenticated, i.e. in the case that the device installed on the reader/writer equipment 512 is a valid power plug adapter 13, in step S104, the accepting unit 754 accepts a credit card number. That is to say, in the case of paying by credit card for the power consumed via the power plug adapter 13 of the user, the user operates the keyboard 552 and inputs his/her credit card number. The accepting unit 754 accepts the input credit card number. Alternatively, the user inputs user information such as user name, contact information, and so forth, and may perform user registration for the power plug adapter 13. That is to say, the affiliation of the power plug adapter 13 is clarified, so that who has used how much power can be comprehended, and the appropriate person will be billed the appropriate amount of the electric bill. As means toward this purpose, not only the credit card number and user name, but other information may be used to perform user registration. According to the present embodiment, description will be given for a method to perform user registration with a credit card number.

In step S105 the transmitting unit 751 transmits the credit card number. That is to say, the input credit number is input in the reader/writer 633 of the reader/writer equipment 512 via the USB cable 513.

In the case determination is made in step S103 that the ID is not authenticated, the display unit 755 displays an error. That is to say, a message such as "This power adapter cannot be used", for example, is displayed on the display 553.

In step S133 in Fig. 18, the receiving unit 295 of the reader/writer 633 receives the credit number transmitted from the personal computer 511. In step S134, processing to store the credit number is executed.

That is to say, the generating unit 291 of the reader/writer 633 generates a command to store the received credit number in the IC chip 325. The transmitting unit 293 transmits the command modulated by the modulating unit 292, including the credit card number. The command from the high frequency signal is input in the IC chip 325, similar to the case described above. Upon receiving a command to store the credit number, the signal processing unit 478 of the IC chip 325 stores the credit number in the storage unit 431. Note that the credit card number functions as billing information, but can be caused to function as identifying information. Also, the user information can be caused to function as billing information.

Thus the user stores the credit number serving as billing information in dedicated power plug adapter 13 of the user. Note that by similar processing, in addition to billing information such as prepaid electronic money information or the like, specification information such as the voltage supplied by the power plug adapter 13, and identifying information including an ID to identify oneself, can also be stored by the user. Note that identifying information including the ID may be stored by the user, but also may be stored beforehand by the manufacturer of the power plug adapter 13.

### [Billing Processing]

The billing processing is performed as follows, for example. At the power gateway 12, the processing unit 304 of the controller 110 reads out the history information including past power consumption, along with the credit card number, which is stored in the IC chip 325. The transmitting unit 301 outputs the read out history information and credit card number to the communication unit 111. The communication unit 111 transmits the history information and credit card number to the home server 15 via the antenna 112. The communication unit 502 of the home server 15 receives the history information and credit card number from the communication unit 111 of the power gateway 12, via the antenna 503.

The managing unit 501 of the home server 15 performs billing processing, corresponding to the history information and credit card number received from the power gateway 12. That is to say, the managing unit 501 performs communication with a billing server that is connected via an unshown Internet, IP network, cellular network, or the like, and request a withdrawal from the bank account of the user for the usage fee of the amount of power consumed in the past. The server of the credit card company executes withdrawal processing according to this request. The billing processing may be performed at each occurrence, or may be performed in summary after a fixed number of days (e.g. one week or one month) have passed since the previous billing processing, or when first starting use. Also, the credit card number may be input by the user at each occurrence of billing processing.

Note that the history information stored in the power plug adapter 13 for each user may be consolidated weekly or monthly, for example, and based on the consolidation results, a representative may collect the dues from each person and pay the entire power usage bill.

Also, as billing information, in the case that prepaid electronic money information is stored in the power plug adapter 13, the controller 110 reads out the amount of power consumed from the prepaid electronic money that is stored, and performs updating processing to reduce the amount with each use. That is to say, each time the user temporarily ends the power use, such as turning off the light of the electric lamp, the processing is performed. Thus, the current amount remains in the power plug adapter 13.

In the case that payment is delayed by a defined period or longer, the power company transmits a command to the home server 15 to inhibit usage. Upon receiving this command, the home server 15 transmits the ID of the user to the power gateway 12. The determining unit 303 of the controller 110 stores the ID, and makes a determination with the determining processing in step S15 in Fig. 11 as described above.

### [Modification of Power Plug Adapter 13]

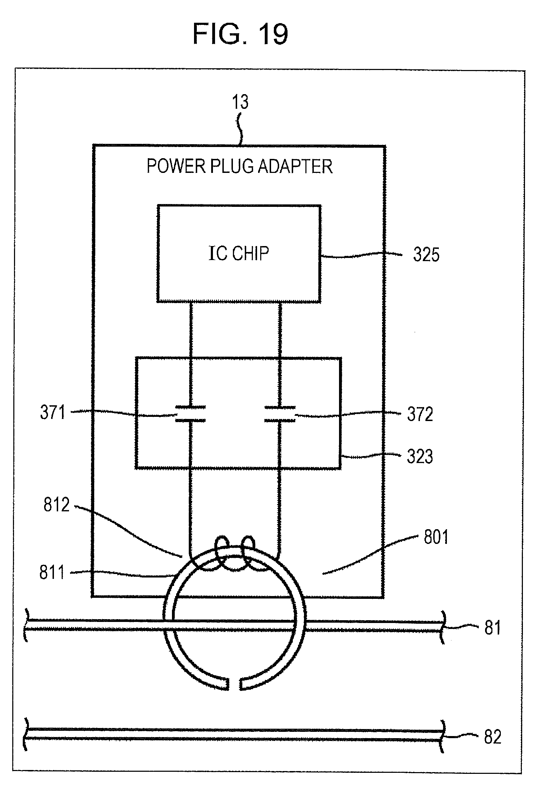

Fig. 19 is a block diagram illustrating a configuration of another embodiment of the power plug adapter 13. According to this embodiment, a magnetic head 801 is included in addition to the high-pass filter 323 and IC chip 325. The magnetic head 801 has a core 811 and a coil 812 that is wrapped around the core 811. The both ends of the coil 812 are connected to the IC chip 325 via the capacitors 371 and 372 that each make up a high-pass filter.

The core 811 is configured so as to be approximately cylindrical, and one of the power lines 81 and 82 is disposed so as to pass through the cylinder at time of use. According to the embodiment in Fig. 19, the power line 81 is disposed so as to pass through the cylinder.

When the high frequency signal flows to the power line 81, induced voltage is generated in the core 801, and this is detected by the coil 812 and input into the IC chip 325. Accordingly, similar to the case described above, communication can occur between the power plug adapter 13 and power gateway 12, via the power lines 81 and 82.

Note that in the present Specification, the term "system" indicates an entire apparatus that is made up of multiple apparatuses.

Also, the embodiments of the present invention are not to be limited to the embodiments described above, and various types of modifications can be made within the scope and intent of the present invention.

### Reference Signs List

- 1: power supply control system
- 12: power gateway
- 13: power plug adapter
- 14: electronic equipment
- 15: home server
- 325: IC chip

## Claims

1. A power relay terminal comprising:
an input terminal in which power is input;
an output terminal configured to relay the power supplied from the input terminal and outputs to an equipment which is connected and is configured to operate by power; and
a storage device which, in order to receive authentication from a power supply control apparatus connected to the input terminal and receive a supply of the power from the power supply control terminal in the input terminal, is configured to output stored power information to the power supply control apparatus via the input terminal, by subjecting a high frequency signal that is input from the power supply control apparatus via the input terminal to load modulation.

2. The power relay terminal according to Claim 1, wherein the storage device is an electronic tag.

3. The power relay terminal according to Claim 2, further comprising:
a filter that is configured to cause the high frequency signal input via the input terminal to be input to the storage device, while inhibiting the power that is input via the input terminal from being input into the storage device.

4. The power relay terminal according to Claim 3, further comprising:
a filter that is configured to supply the power that is input from the input terminal to the output terminal, while inhibiting the high frequency signal that is input from the input terminal from being supplied to the output terminal.

5. The power relay terminal according to Claim 3 or Claim 4, further comprising:
a power generating unit configured to be connected in parallel to the storage device, and to supply, to the storage device, the voltage generated by the high frequency signal which is input from the input terminal.

6. The power relay terminal according to Claim 5, wherein the voltage generating unit is made up of a coil or a transformer.

7. The power relay terminal according to Claim 6, wherein the power information stored in the storage device includes at least one of identifying information and history information.

8. The power relay terminal according to Claim 7, wherein the power information stored in the storage device further includes specification information or billing information.

9. A power relay method which is a power relay method of a power relay terminal providing an input terminal and an output terminal and a storage device,
wherein the input terminal inputs power;
and wherein the output terminal configured to relay the power supplied from the input terminal and output to an equipment which is connected and operates by power;
and wherein the storage device outputs, in order to receive authentication from a power supply control apparatus connected to the input terminal and receive a supply of the power from the power supply control terminal in the input terminal, stored power information to the power supply control apparatus via the input terminal, by subjecting a high frequency signal that is input from the power supply control apparatus via the input terminal to load modulation.

10. A power supply control apparatus comprising:
an output terminal configured to output output power;
a switch configured to switch when outputting and when blocking the output power from the output terminal;
a communication unit configured to output a high frequency signal via the output terminal and communicate with a power relay terminal that further relays and outputs the output power supplied from the output terminal to the equipment operated by power, thereby reading out power information of the power relay terminal; and
a control unit configured to switch a switch so that, upon authenticating from the power information read out by the communication unit that that which is connected to the output terminal is the power relay terminal that relays and outputs, to the equipment, the output power supplied from the output terminal, the output power is output from the output terminal, while the output power supplied to the power relay terminal is measured, and when authentication is not made that that which is connected to the output terminal is the power relay terminal, the output of the output power from the output terminal is blocked.

11. The power supply control apparatus according to Claim 10, wherein the control unit stores the results of the output power measurement in the power relay terminal as history information.

12. The power supply control apparatus according to Claim 11, wherein the control unit reads out the history information from the power relay terminal for billing processing.

13. The power supply control apparatus according to Claim 12, wherein the control unit further reads out the billing information from the power relay terminal for billing processing.

14. The power supply control apparatus according to Claim 13, wherein the control unit reads out a credit card number or electronic money information or user information as the billing information.

15. The power supply control apparatus according to Claim 12, further comprising:
a voltage switching unit is configured to switch AC power that is input externally to the output power of a predetermined voltage, according to specification information stored in the storage device provided to the connected power relay terminal or the equipment, and outputs to the output terminal.

16. The power supply control apparatus according to Claim 15, wherein the voltage switching unit is configured to switch and output, as the output power, one of AC power or DC power of a predetermined voltage, according to specification information recorded in the storage device provided to the connected power relay terminal or the equipment.

17. A power supply control method of a power supply control apparatus comprising:
an output terminal;
a switch;
a communication unit; and
a control unit; wherein
the output terminal is configured to output the output power;
the switch is configured to switch, when outputting and when blocking the output power from the output terminal;
the communication unit is configured to output a high frequency signal via the output terminal and communicates with a power relay terminal that further relays and outputs the output power supplied from the output terminal to the equipment operated by power, thereby reading out power information of the power relay terminal; and
the control unit is configured to switch the switch so that, upon authenticating from the power information read out by the communication unit that that which is connected to the output terminal is the power relay terminal that relays and outputs, to the equipment, the output power supplied from the output terminal, the output power is output from the output terminal, while the output power supplied to the power relay terminal is measured, and when authentication is not made that that which is connected to the output terminal is the power relay terminal, the output of the output power from the output terminal is blocked.

18. A power supply control system comprising:
a power supply control apparatus configured to output output power supplied to equipment that is operated by power; and
a power relay terminal configured to relay and output, to the equipment, the output power input from the power supply control apparatus,
wherein the power supply control apparatus includes
an output terminal configured to output the output power,
a switch configured to switch when outputting and when blocking the output power from the output terminal,
a communication unit configured to output a high frequency signal via the output terminal and communicate with the power relay terminal which is connected to the output terminal, thereby reading out power information of the power relay terminal, and
a control unit configured to switch the switch so that, upon authenticating from the power information read out by the communication unit that that which is connected to the output terminal is the power relay terminal that relays and outputs, to the equipment, the output power supplied from the output terminal, the output power is output from the output terminal, while the output power supplied to the power relay terminal is measured, and when authentication is not made that that which is connected to the output terminal is the power relay terminal, the output of the output power from the output terminal is blocked;
and wherein the power relay terminal includes
an input terminal in which the output power is input,
an output terminal of the power relay terminal, configured to relay the output power supplied from the input terminal and outputs to the connected equipment, and
a storage device which, in order to receive authentication from the power supply control apparatus connected to the input terminal and receive a supply of the output power from the power supply control terminal in the input terminal, outputs the stored power information to the power supply control apparatus via the input terminal, by subjecting a high frequency signal that is input from the power supply control apparatus via the input terminal to load modulation.

19. A power supply control method of a power supply control system including
a power supply control apparatus configured to output output power to be supplied to equipment operated by power, and
a power relay terminal configured to relay and output, to the equipment, the output power input from the power supply control apparatus,
wherein in the power supply control apparatus,
the output terminal outputs the output power;
the switch switches, when outputting and when blocking the output power from the output terminal;
the communication unit outputs a high frequency signal via the output terminal and communicates with the power relay terminal that is connected to the output terminal, thereby reading out power information of the power relay terminal; and
the control unit switches the switch so that, upon authenticating from the power information read out by the communication unit that that which is connected to the output terminal is the power relay terminal that relays and outputs, to the equipment, the output power supplied from the output terminal, the output power is output from the output terminal, while the output power supplied to the power relay terminal is measured, and when authentication is not made that that which is connected to the output terminal is the power relay terminal, the output of the output power from the output terminal is blocked;
and wherein in the power relay terminal,
the input terminal inputs the output power;
the output terminal of the power relay terminal relays and output, to the connected equipment, the output power supplied from the input terminal; and
the storage device outputs, in order to receive authentication from a power supply control apparatus connected to the input terminal and receive a supply of the output power from the power supply control apparatus in the input terminal, stored power information to the power supply control apparatus via the input terminal, by subjecting a high frequency signal that is input from the power supply control apparatus via the input terminal to load modulation.
